# EUROPÄISCHE PATENTANMELDUNG

(11) **EP 3 210 875 A1**
(43) Veröffentlichungstag der Anmeldung: **30.08.2017**
(21) Anmeldenummer: 17157234.0
(22) Anmeldetag: 21.02.2017
(51) Int. Cl.: B63C 9/18

(54) **VORRICHTUNG ZUR GASVERSORGUNG EINES AIRBAGS**

(30) Priorität: 29.02.2016 AT 501502016
(71) Anmelder: Peak Technology GmbH, 4615 Holzhausen (AT)
(72) Erfinder: Stupperich, Patrick, 5023 Salzburg (AT)
(74) Vertreter: Stütz, Jan

(57) **Zusammenfassung**

Es wird eine Vorrichtung zur Gasversorgung eines Airbags mit einem ein Druckmittel aufnehmenden Druckspeicher (1) und mit einer daran angeschlossenen, einen Strömungskanal (2) für das Druckmittel aufweisenden Auslöseeinheit (3) vorgeschlagen, die bei Betätigung Druck aus dem Druckspeicher (1) durch den Strömungskanal (2) ablässt. Um vorteilhaft Wiederinbetriebnahmeverhältnisse zu schaffen, wird vorgeschlagen, dass die Auslöseeinheit (3) einen in einem Gehäuse (4) zwischen einer Ausgangslage, in welcher der Strömungskanal (2) verschlossen ist, und einer den Strömungskanal (2) freigebenden Freigabelage verlagerbaren Ventilstößel (5) umfasst, wobei im verschlossenen Strömungskanal (2) ein Rückschlagventil (6) derart angeordnet ist, dass es den Strömungskanal (2) zum Befüllen des Druckspeichers über die Auslöseeinheit (3) freigibt.

## Beschreibung

Die Erfindung bezieht sich auf eine Vorrichtung zur Gasversorgung eines Airbags mit einem ein Druckmittel aufnehmenden Druckspeicher und mit einer daran angeschlossenen, einen Strömungskanal für das Druckmittel aufweisenden Auslöseeinheit, die bei Betätigung Druck aus dem Druckspeicher durch den Strömungskanal ablässt.

Derzeit existieren verschiedene Systeme zur Rettung von Personen, die in Lawinen geraten sind. Die Vorrichtungen, beispielsweise ein Lawinenrettungsrucksack umfassen beispielsweise zwei Kammern, in denen sich jeweils ein Ballon befindet, der mithilfe eines aus Druckgasflaschen stammenden Gasluftgemisches gefüllt wird. Wird eine Lawine ausgelöst, muss eine Auslöseeinheit betätigt werden, die dafür sorgt, das Druckmittel aus dem Druckspeicher in die Ballonkammern übergeleitet wird. Diese Auslösung erfolgt beispielsweise manuell durch Ziehen einer Reißleine oder dgl. Auch elektronische Lösungen sind denkbar, welche den jeweiligen Gefahrenzustand erkennen. Die aufgeblasenen Ballone wirken als Auftriebskörper, die verhindern, dass ein Benutzer in eine Lawine gezogen wird und stattdessen auf dieser Lawine aufgeschwimmt und auf der Lawine mitgerissen wird. Des Weiteren sind beispielsweise aus dem Skisport in letzterer Zeit Airbagsysteme bekanntgeworden, die im Falle eines Sturzes automatisch auslösen und insbesondere Brust- oder Rückenbereich eines Skifahrers schützen. Auch als Schwimmwesten bzw. Schwimmkörper finden solche Airbagsysteme Verwendung.

Zurzeit gibt es bei den verwendeten Airbags im Wesentlichen folgende Systeme. Einerseits jene, die über Ventilatoren den Airbag entfalten und anderseits solche, die mittels Druckspeicher und einem entsprechenden Venturisystem den Airbag entfalten. Übliche bekannte Vorrichtungen arbeiten insbesondere mit einer Auslöseeinheit, die den befüllten Druckspeicher bei Betätigung der Vorrichtung aktiviert. Dies geschieht beispielsweise mittels einer Anstecheinheit, welche über eine Pyrotechnik bzw. eine vorgespannte Feder den mittels Stichscheibe verschlossenen Druckspeicher ansticht und öffnet. Das Gas strömt dann über einen Strömungskanal und befüllt den Airbag mit einem entsprechenden Volumen. Nach erfolgtem Einsatz ist der Druckspeicher vollkommen entleert und muss für den erneuten Einsatz befüllt bzw. in weiterer Folge gewechselt werden. Dies erfolgt üblicherweise über einen Airbaghersteller oder einen autorisierten Händler. Der Konsument kann in diesem Fall eine solche Befüllung nicht eigenständig durchführen. Die Auslöseeinheit muss für den Fall, das ein pyrotechnisches System vorliegt, gleichfalls ausgetauscht werden. Bei federvorgespannten Auslöseeinheiten werden diese durch Nachspannen der Feder wieder scharfgestellt. Der Nachteil derartiger Systeme mit der derzeitigen Konfiguration ist somit leicht ersichtlich. Der Kunde hat bei den derzeitigen Systemen immer eine Abhängigkeit bezüglich der Befüllung und dem Wiederauslösebereitstellen der Vorrichtung.

Aufgabe der Erfindung ist es daher, eine Vorrichtung der eingangs geschilderten Art zu schaffen, die ein rasches und aufwandarmes Wiederinbetriebnehmen einer zuvor ausgelösten Vorrichtung zur Gasversorgung erlaubt, wobei dies insbesondere durch einen Nutzer unmittelbar nach einem Auslösen der Vorrichtung möglich sein soll.

Die Erfindung löst die gestellte Aufgabe dadurch, dass die Auslöseeinheit einen in einem Gehäuse zwischen einer Ausgangslage, in welcher der Strömungskanal verschlossen ist, und einer den Strömungskanal freigebenden Freigabelage verlagerbaren Ventilstößel umfasst, wobei im verschlossenen Strömungskanal ein Rückschlagventil derart angeordnet ist, dass es den Strömungskanal zum Befüllen des Druckspeichers über die Auslöseeinheit freigibt. Eine erfindungsgemäße Vorrichtung ist zu befüllen beliebiger Airbags geeignet, wie sie beispielsweise in der Beschreibungseinleitung erwähnt sind.

Erfindungswesentlich ist es, dass die Auslöseeinheit eine in einem Gehäuse angeordneten Ventilstößel umfasst, der wiederholt zwischen Freigabelage und Ausgangslage verlagerbar ist. Wurde die Vorrichtung ausgelöst und hat der Ventilstößel den Strömungskanal freigegeben, so kann der Ventilstößel in weiterer Folge durch einen Nutzer gegebenenfalls mit einem Werkzeug wieder in seine Ausgangslage zurückverlagert und in dieser Ausgangslage entsprechend gesichert werden. Um die Vorrichtung in weiterer Folge wieder rasch funktionsfähig zu machen, ist im verschlossenen Strömungskanal ein Rückschlagventil derart angeordnet, dass es dem Strömungskanal zum Befüllen des Druckspeichers über die Auslöseeinheit freigibt. Dieses Rückschlagventil verhindert in der Ausgangslage des Ventilstößels ein Entleeren des Druckspeichers über den Strömungskanal, erlaubt in diesem Zustand aber ein Befüllen des Druckspeichers über den Strömungskanal mit einer entsprechenden Vorrichtung. Dies kann beispielsweise eine manuelle oder elektrische Pumpe bzw. ein weiterer Druckspeicher oder dgl. sein. Das Gehäuse wird vom Druckmittel zum Füllen des Airbags in axialer Richtung und/oder quer dazu durchströmt, je nachdem, wie es für den jeweiligen Einsatz zweckmäßig ist.

Erfindungsgemäß kommt eine Auslöseeinheit zum Einsatz, die den Druckspeicher verschließt und bei der Aktivierung eine Entleerung ermöglicht, jedoch ohne notwendigen Austausch von Komponenten nach erfolgter Auslösung auskommt. Der Endverbraucher kann den Druckspeicher dann unmittelbar, beispielsweise mit einer mitgeführten Handpumpe, wieder befüllen. Die neue Auslöseeinheit arbeitet pyrotechnikfrei und ist mittels Federn, gegebenenfalls auch hydraulisch bzw. pneumatisch, wieder vorzuspannen bzw. wieder scharfzustellen. Das erfindungsgemäße System arbeitet somit in beide Richtungen, erlaubt also ein gezieltes, rasches Entleeren des Druckspeichers bzw. ein Überleiten des Druckmittels aus dem Druckspeicher in einen Airbag und zudem ein Wiederbefüllen des Druckspeichers nach erfolgtem Einsatz.

Eine vorteilhafte Konstruktionsvariante ergibt sich, wenn das Gehäuse eine zylinderförmige Führung für den Ventilstößel ausbildet, der in seiner Ausgangslage einen zylinderkopfseitigen Abschnitt des Strömungskanales verschließt, wobei das Rückschlagventil vorzugsweise in einen ventilstößelkopfseitigen Strömungskanal eingesetzt ist. Dies erlaubt eine besondere kompakte Bauweise, da nur wenige Bauteile vorzusehen sind, womit die Fehleranfälligkeit erheblich reduziert werden kann. Der Ventilstößelkopf ist in der Ausgangslage dichtend an den Zylinderkopf angelegt und unterbindet dabei ein Austreten vom Druckmittel aus dem Druckspeicher. Um dieses ungewollte Austreten zu vermeiden, ist der Ventilstößel mit einer entsprechenden Kraft gegen den Zylinderkopf anzustellen.

Um dabei für definierte Verhältnisse sorgen zu können, empfiehlt es sich, wenn dem Ventilstößelkopf ein federbelasteter Kolben zugeordnet ist, der in der Ausgangslage des Ventilstößels den zylinderkopfseitigen Abschnitt des Strömungskanales verschließt und der vorzugsweise das Rückschlagventil in einem Strömungskanalabschnitt aufnimmt. Gemäß dieser Ausgestaltungsvariante kann das Rückschlagventil somit gegebenenfalls direkt im festbelasteten Kolben angeordnet sein. Wird ein Ventilstößel bei dieser Ausgestaltungsvariante in die Freigabelage verlagert, so wird der Ventilstößelkopf vom Zylinderkopf abheben und den Strömungskanal freigeben. Das Druckmittel kann somit in einem den Ventilstößelkopf umgebenden Freiraum eindringen und wird dann von dort aus weitergeleitet.

Nach einer Konstruktionsvariante der Erfindung bildet das Gehäuse eine zylinderförmige Führung für den Ventilstößel aus, der einen kopfseitigen Betätigungsansatz aufweist, der das in einem zylinderkopfseitigen Abschnitt des Strömungskanales angeordnete Rückschlagventil in seiner den Strömungskanal freigebenden Freigabelage öffnet. In der Ausgangslage wird der Strömungskanal somit vom Rückschlagventil versperrt, das in der Freigabelage vom Betätigungsansatz derart betätigt wird, dass erst im Strömungskanal zum Überleiten vom Druckmittel aus dem Druckspeicher in den Airbag freigibt.

Die Ableitung des Druckmittels aus der Vorrichtung erfolgt vorzugsweise über den Ventilstößel, der dazu wenigstens einen axialen Strömungskanalabschnitt und wenigstens einen quer dazu verlaufenden Strömungskanalabschnitt umfasst. Insbesondere wird das Druckmittel zum Überleiten von Druckmittel aus dem Druckspeicher in den Airbag zunächst den Ventilstößelkopf umströmen und dann im Bereich des Ventilstößelkopfes durch eine Querbohrung in den Axialströmungskanalabschnitt einzutreten und in weiterer Folge über eine entsprechende Leitung dem Airbag zugeführt wird.

Zur Schaffung einer möglichst einfachen, aber dennoch sicher arbeitenden Auslösevorrichtung wird vorgeschlagen, dass der Ventilstößel in seiner Ausgangslage von einer Haltevorrichtung der Auslöseeinheit gehalten ist und im Sinne einer Verlagerung in seine Freigabestellung von einer Feder vorbelastet ist. Diese Feder kann eine beliebige Feder, beispielsweise eine Schraubfeder, eine Tellerfeder, eine hydraulische oder pneumatische Feder, bzw. ein beliebiges Federpaket sein. Diese Feder stellt durch ihre Vorspannung sicher, dass der in der Ausgangslage verschlossene Strömungskanal bei Betätigen der Auslöseeinheit sicher in die Freigabelage gebracht wird. Eine kompaktarbeitende und mit wenigen Bauteilen auskommende Haltevorrichtung für diesen Zweck umfasst wenigstens ein, vorzugsweise mehrere in einem Gehäuse verstellbar geführte Sperrmittel, wobei das Sperrmittel aus einer in eine Ausnehmung des Ventilstößels und des Gehäuses eingreifenden, sowie den Ventilstößel in seiner Ausgangslage haltenden Sperrlage verlagerbar ist und bei Betätigung der Auslöseeinheit den Ventilstößel im Gehäuse freigibt. In einem einfachen Fall kann dieses Sperrmittel in eine Ausnehmung des Ventilstößels eingreifender Stift, eine Gabel oder dgl. sein, die bei entsprechender Betätigung aus dem Gehäuse ausgezogen wird bzw. in entsprechende Gehäuseausnehmungen eingezogen wird und dadurch den Ventilstößel freigibt.

Eine besonders elegante Lösung wird erhalten, wenn als Sperrmittel eine in eine radiale Durchbrechung des Gehäuses eingesetzte Sperrkugel vorgesehen ist und wenn dem Gehäuse im Bereich der Durchbrechung eine Hülse zugeordnet ist, welche eine Anlauffläche für die Sperrkugel bildet und welche die Sperrkugel bei freigegebenem Ventilstößel zumindest teilweise in einer Ausnehmung aufnimmt. Diese Hülse sorgt mit ihrer Anlauffläche dafür, dass die Kugel in der Ausgangslage des Ventilstößels durch die Gehäusewand in die Ausnehmung am Ventilstößel eingedrückt und dort gehalten wird. Somit wird der Ventilstößel in seiner Ausgangslage gesichert. Bei Betätigung der Auslöseeinheit, beispielsweise durch Verlagerung der Hülse durch axiales Verschieben oder Verdrehen, wird eine in der Hülse vorgesehene Ausnehmung über die Durchbrechung des Gehäuses geschoben, sodass die Kugel in die Ausnehmung eingleiten kann und der Ventilstößel freigegeben und durch die Kapsel der Feder in die Freigabelage verlagert werden kann.

Um die Vorrichtung gegebenenfalls rasch wieder mit Druckmittel befüllen zu können, empfiehlt es sich, wenn dem Ventilstößel fußseitig eine Schnellkupplung für eine zum Airbag führende Anschlussleitung zugeordnet ist, über welche Schnellkupplung alternativ eine Druckluftversorgungseinrichtung zum Befüllen des Druckspeichers anschließbar ist. Diese Schnellkupplung muss dem Ventilstößel nur zugeordnet sein, aber nicht Teil des Ventilstößels sein. Dies bedeutet, dass der Strömungskanal des Ventilstößels in den Strömungskanal der Schnellkupplung mündet.

Um besonders kompakte Bauverhältnisse zu schaffen, ist der Druckspeicher vorzugsweise direkt dem Gehäuse zugeordnet.

In der Zeichnung ist der Erfindungsgegenstand beispielsweise dargestellt. Es zeigen
- Fig. 1: eine erfindungsgemäße Vorrichtung im Längsschnitt mit in Ausgangslage befindlichem Ventilstößel,
- Fig. 2: die Vorrichtung aus Fig. 1 mit in Freigabelage befindlichem Ventilstößel,
- Fig. 3: ein vergrößertes Detail des Ventilstößelkopfes aus Fig. 1 und 2 im Längsschnitt,
- Fig. 4: eine Konstruktionsvariante einer erfindungsgemäßen Vorrichtung mit dem Ventilstößel in seiner Ausgangslage,
- Fig. 5: die Vorrichtung aus Fig. 4 mit dem Ventilstößel in seiner Freigabelage und
- Fig. 6: ein alternatives Sperrmittel für den Ventilstößel.

Eine Vorrichtung zur Gasversorgung eines nicht näher dargestellten Airbags umfasst einen ein Druckmittel aufnehmenden Druckspeicher 1 und eine daran angeschlossene, einen Strömungskanal 2 für das Druckmittel aufweisende Auslöseeinheit 3, die bei Betätigung Druck aus dem Druckspeicher 1 durch den Strömungskanal 2 ablässt. Die Auslöseeinheit 3 umfasst dabei einen, in einem Gehäuse 4 zwischen einer Ausgangslage, in welcher der Strömungskanal 2 verschlossen ist und einer den Strömungskanal 2 freigebenden Freigabelage verlagerbaren Ventilstößel 5, wobei im verschlossenen Strömungskanal 2 ein Rückschlagventil 6 derart angeordnet ist, dass es den Strömungskanal 2 zum Befüllen des Druckspeichers 1 über die Auslöseeinheit 3 freigibt.

Dies bedeutet, dass der Strömungskanal 2 bei in Ausgangslage befindlichem Ventilstößel 5 für das Druckmittel derart verschlossen ist, dass ein Überströmen vom Druckmittel aus dem Druckmittelspeicher durch den Strömungskanal vermieden wird. Allerdings ist in diesem Zustand ein Überleiten von Druckmittel durch den Strömungskanal 2 in den Druckspeicher 1 zur Befüllung des Druckspeichers 1 trotzdem möglich.

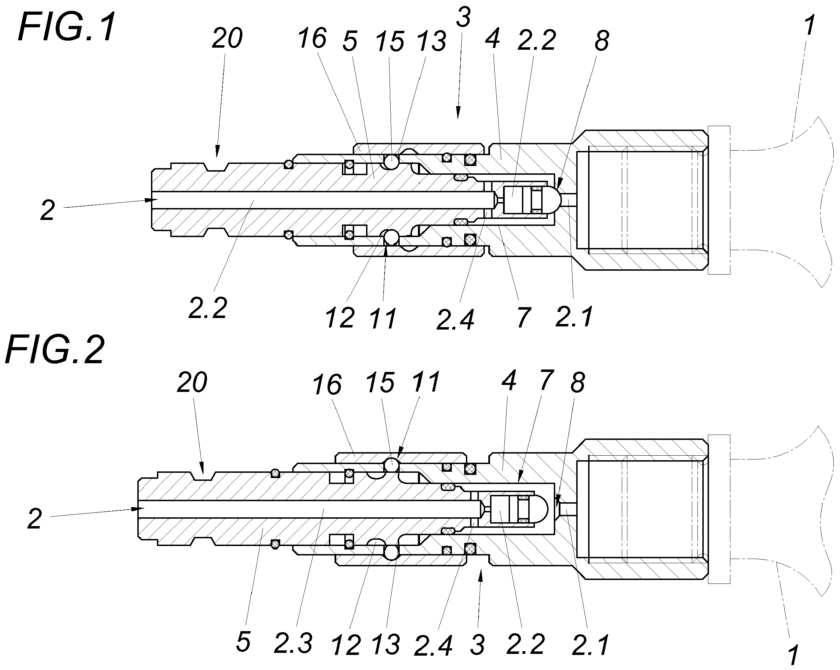

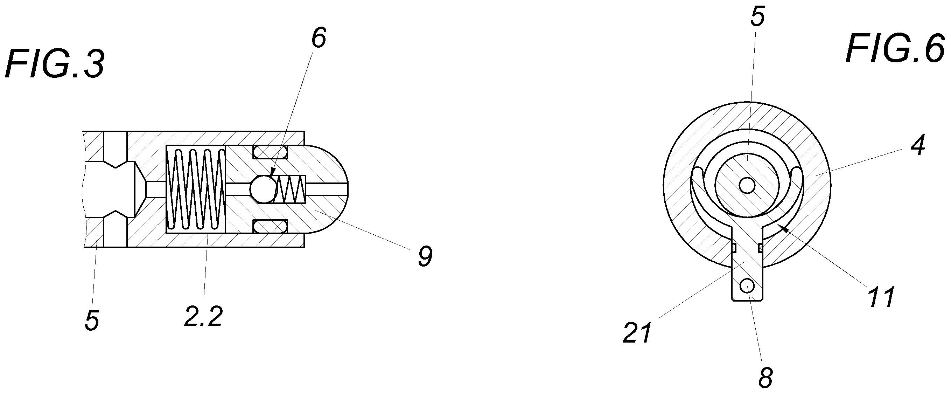

In den Ausgestaltungsformen der Erfindung nach Fig. 1 und 2 weist das Gehäuse 4 eine zylinderförmige Führung 7 für den Ventilstößel auf, der in seiner Ausgangslage eine einen zylinderkopfseitigen Abschnitt 8 des Strömungskanals 2 verschließt, wobei das Rückschlagventil 6 in einen ventilstößelkopfseitigen Strömungskanal 2.2. eingesetzt ist (siehe Fig. 3). Dem Ventilstößelkopf ist ein federbelasteter Kolben 9 zugeordnet, der in der Ausgangslage des Ventilstößels 5 den zylinderkopfseitigen Abschnitt 8 des Strömungskanals 2.1 verschließt und der das Rückschlagventil 6 im Strömungskanalabschnitt 2.2 aufnimmt.

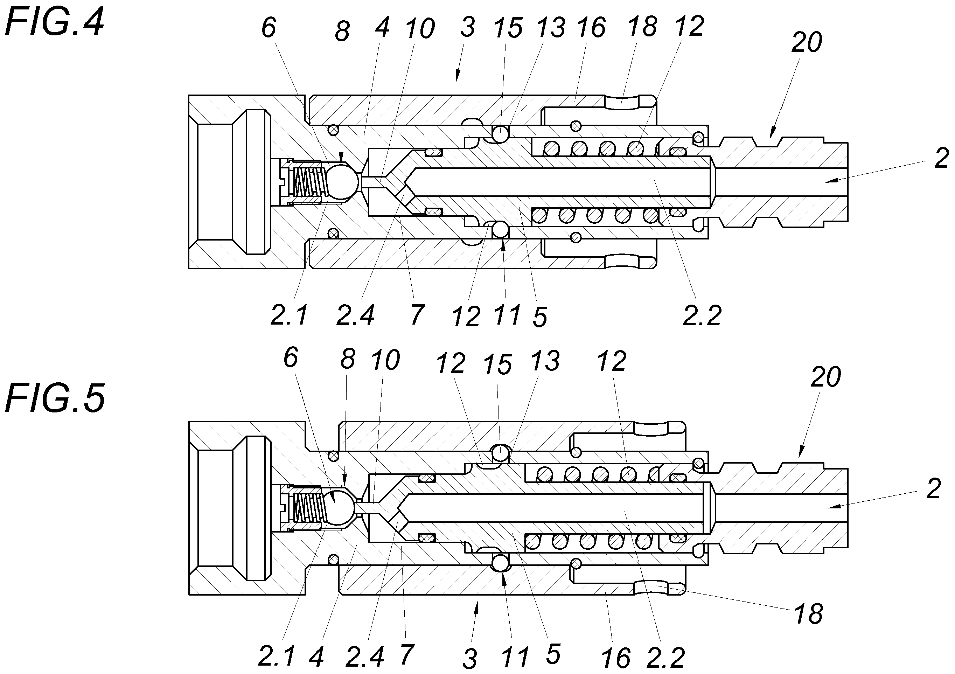

In der Ausgestaltungsvariante nach den Fig. 4 und 5 bildet das Gehäuse 4 ebenfalls eine zylinderförmige Führung 7 für den Ventilstößel 5 aus. Allerdings weist der Ventilstößel 5 einen kopfseitigen Betätigungsansatz 10 auf, der das in einem zylinderkopfseitigen Abschnitt 8 des Strömungskanales 2.1 angeordnete Rückschlagventil 6 in seiner den Strömungskanal 2 freigebenden Freigabelage öffnet (Fig. 5) und den Strömungskanal für das Druckmittel freigibt.

In beiden Ausgestaltungsvarianten umfasst der Ventilstößel 5 wenigstens einen axialen Strömungskanalabschnitt 2.3 und wenigstens einen dazu quer verlaufenden Strömungskanalabschnitt 2.4. Zudem ist der Ventilstößel 5 in seiner Ausgangslage (Fig. 1, Fig. 4) von einer Haltevorrichtung 11 der Auslöseeinheit 3 gehalten und im Sinne einer Verlagerung in seine Freigabestellung von einer Feder 12 vorbelastet.

Auch wenn in den Ausgestaltungsvarianten nach Fig. 1 und 2 explizit keine diesbezügliche Feder eingezeichnet ist, so kann diese durchaus vorgesehen sein. Der Gasdruck wirkt ja bereits im Öffnungssinn auf den Ventilstößel 5.

Die Haltevorrichtung 11 umfasst wenigstens ein im Gehäuse 4 verstellbar geführtes Sperrmittel, das aus einer in eine Ausnehmung 12 des Ventilstößels 5 und des Gehäuses 4 eingreifen, sowie den Ventilstößel 5 in seiner Ausgangslage haltenden Sperrlage verlagerbar ist, und bei Betätigung der Auslöseeinheit 3 den Ventilstößel 5 im Gehäuse 4 freigibt. Dazu ist als Sperrmittel eine in eine radiale Durchbrechung 13 des Gehäuses 4 eingesetzte Sperrkugel 15 vorgesehen und ist dem Gehäuse 4 im Bereich der Durchbrechung 13 eine Hülse 16 zugeordnet, welche eine Anlauffläche 17 für die Sperrkugel 15 bildet und welche die Sperrkugel 15 bei freigegebenem Ventilstößel 5 zumindest teilweise in einer Ausnehmung 18 aufnimmt. Die Hülse 16 weist Bohrungen 19 auf, in welche beispielsweise ein Seilzug zur Betätigung der Vorrichtung einsetzbar ist.

Dem Ventilstößel 5 ist fußseitig eine Schnellkupplung 20 für zum Airbag führende Anschlussleitungen zugeordnet, an welche Schnellkupplung 20 alternativ eine Druckluftversorgungseinrichtung, beispielsweise eine Luftpumpe, zum Befüllen des Druckspeichers anschließbar ist. Der Druckspeicher 1 ist direkt an das Gehäuse 4 angeschraubt. Fig. 6 zeigt ein Alternativmittel zur Sperrung des Ventilstößels 5 in seiner Ausgangslage. Dieses Mittel ist eine Art Gabel 21, die in eine Ringnut des Ventilstößels 5 eingreift.

## Patentansprüche

1. Vorrichtung zur Gasversorgung eines Airbags mit einem ein Druckmittel aufnehmenden Druckspeicher (1) und mit einer daran angeschlossenen, einen Strömungskanal (2) für das Druckmittel aufweisenden Auslöseeinheit (3), die bei Betätigung Druck aus dem Druckspeicher (1) durch den Strömungskanal (2) ablässt, **dadurch gekennzeichnet, dass** die Auslöseeinheit (3) einen in einem Gehäuse (4) zwischen einer Ausgangslage, in welcher der Strömungskanal (2) verschlossen ist, und einer den Strömungskanal (2) freigebenden Freigabelage verlagerbaren Ventilstößel (5) umfasst, wobei im verschlossenen Strömungskanal (2) ein Rückschlagventil (6) derart angeordnet ist, dass es den Strömungskanal (2) zum Befüllen des Druckspeichers über die Auslöseeinheit (3) freigibt.

2. Vorrichtung nach Anspruch 1, **dadurch gekennzeichnet, dass** das Gehäuse (4) eine zylinderförmige Führung (7) für den Ventilstößel (5) ausbildet, der in seiner Ausgangslage einen zylinderkopfseitigen Abschnitt (8) des Strömungskanales (2.1) verschließt, wobei das Rückschlagventil (6) vorzugsweise in einen ventilstößelkopfseitigen Strömungskanal (2.2) eingesetzt ist.

3. Vorrichtung nach Anspruch 3, **dadurch gekennzeichnet, dass** dem Ventilstößelkopf ein federbelasteter Kolben (9) zugeordnet ist, der in der Ausgangslage des Ventilstößels (5) den zylinderkopfseitigen Abschnitt (8) des Strömungskanales (2.1) verschließt und der vorzugsweise das Rückschlagventil (6) in einem Strömungskanalabschnitt (2.2) aufnimmt.

4. Vorrichtung nach Anspruch 1, **dadurch gekennzeichnet, dass** das Gehäuse (4) eine zylinderförmige Führung (7) für den Ventilstößel (5) ausbildet, der einen kopfseitigen Betätigungsansatz (10) aufweist, der das in einem zylinderkopfseitigen Abschnitt (8) des Strömungskanales (2.1)angeordnete Rückschlagventil (6) in seiner den Strömungskanal (2) freigebenden Freigabelage öffnet.

5. Vorrichtung nach einem der Ansprüche 1 bis 4, **dadurch gekennzeichnet, dass** der Ventilstößel (5) wenigstens einen axialen Strömungskanalabschnitt (2.3) und wenigstens einen quer dazu verlaufenden Strömungskanalabschnitt (2.4) umfasst.

6. Vorrichtung nach einem der Ansprüche 1 bis 5, **dadurch gekennzeichnet, dass** der Ventilstößel (5) in seiner Ausgangslage von einer Haltevorrichtung (11) der Auslöseeinheit (3) gehalten ist und im Sinne einer Verlagerung in seine Freigabestellung von einer Feder (12) vorbelastet ist.

7. Vorrichtung nach Anspruch 6, **dadurch gekennzeichnet, dass** die Haltevorrichtung (11) wenigstens ein im Gehäuse (4) verstellbar geführtes Sperrmittel umfasst, das aus einer in eine Ausnehmung (12) des Ventilstößels (5) und des Gehäuses (4) eingreifenden, sowie den Ventilstößel (5) in seiner Ausgangslage haltenden Sperrlage verlagerbar ist und bei Betätigung der Auslöseeinheit (3) den Ventilstößel (5) im Gehäuse (4) freigibt.

8. Vorrichtung nach Anspruch 7, **dadurch gekennzeichnet, dass** als Sperrmittel eine in eine radiale Durchbrechung (13) des Gehäuses (4) eingesetzte Sperrkugel (15) vorgesehen ist und dass dem Gehäuse (4) im Bereich der Durchbrechung (13) eine Hülse (16) zugeordnet ist, welche eine Anlauffläche (17) für die Sperrkugel (15) bildet und welche die Sperrkugel (15) bei freigegebenem Ventilstößel (5) zumindest teilweise in einer Ausnehmung (18) aufnimmt.

9. Vorrichtung nach einem der Ansprüche 1 bis 8, **dadurch gekennzeichnet, dass** dem Ventilstößel (5) fußseitig eine Schnellkupplung (20) für eine zum Airbag führende Anschlussleitung zugeordnet ist, über welche Schnellkupplung (20) alternativ eine Druckluftversorgungseinrichtung zum Befüllen des Druckspeichers (1) anschließbar ist.

10. Vorrichtung nach einem der Ansprüche 1 bis 9, **dadurch gekennzeichnet, dass** der Druckspeicher (1) dem Gehäuse (4) zugeordnet ist.
